# EUROPEAN PATENT APPLICATION

(11) **EP 2 565 086 A1**
(43) Date of publication of application: **06.03.2013**
(21) Application number: 11775079.4
(22) Date of filing: 27.04.2011
(51) Int. Cl.: B60R 21/205, B60R 21/23, B60R 21/2334

(54) **METHOD OF MANUFACTURING CUSHION FOR FRONT PASSENGER SEAT AIR BAG DEVICE**

(30) Priority: 28.04.2010 JP 2010104154
(71) Applicant: Ashimori Industry Co., Ltd., Osaka-shi Osaka 550-0014 (JP)
(72) Inventor: SEKINO, Tadaaki, Settsu-shi Osaka 566-0001 (JP)
(74) Representative: Appelt, Christian W.
(86) International application number: PCT/JP2011/060318
(87) International publication number: WO 2011/136298

(57) **Abstract**

A cushion of a passenger airbag device that is reduced in volume and shows a stable behavior when inflated and deployed is achieved. The present invention is a method of producing a cushion (10) of a passenger airbag device (1) having a portion with a desired curvature by sewing side edges of base fabric pieces constituting a main panel (12) and left and right side panels (14) together. The main panel (12) and the side panels (14) are sewn together so as to form a rectangular opening, whose short sides have a length equal to the width of the side panels (14) and whose long sides have a length equal to the width of the main panel (12), at a position where stitches in the main panel (12) and side panels (14) start or end. Then, the portion with a desired curvature is formed by folding the short sides toward the opening and sewing the short sides and the long sides together.

## Description

### Technical Field

The present invention relates to a method of producing a cushion of an airbag device, and more specifically, it relates to a method of producing a cushion of a passenger airbag device.

### Background Art

In general, a passenger airbag device is stored in an instrument panel of a vehicle. When the vehicle stops abruptly due to a collision or the like, the passenger airbag device receives a supply of gas from an inflator attached to the airbag device, is inflated through a deployment door provided in a top surface of the instrument panel, and is deployed in a space between a windshield (front window) and an occupant seated in a passenger's seat, thereby protecting the occupant seated in the passenger's seat.

This passenger airbag device is in contact with the windshield and the top surface of the instrument panel when it is inflated and deployed, whereby the behavior thereof is stabilized. However, if the instrument panel is designed to have a small portion on the occupant side, with respect to an installation position of the airbag device, in the top surface of the instrument panel, the behavior of a cushion (bag) of the airbag device is unstable.
To solve this problem, the volume of the cushion has to be increased to fill a space surrounded by the occupant, the windshield of the vehicle, and the instrument panel, thereby reliably receiving the occupant. Thus, cushions of passenger airbag devices tend to have large volumes.

A cushion of an airbag device having a large volume requires a lager amount of base fabric constituting the cushion. Furthermore, for quick inflation and deployment of the cushion having a large volume, a high-power inflator is needed.
However, because high-power inflators are expensive, the use of such an inflator increases the total cost. In addition, the strength of the airbag device and components thereof also needs to be increased to cope with the power of the inflator, resulting in a problem in that the weight of the airbag device increases.

To overcome this problem, a passenger airbag device, in which the volume of the cushion is reduced so that it can be quickly inflated by a relatively low-power inflator while exhibiting sufficient impact-absorbing ability, has been proposed (see PTL 1).

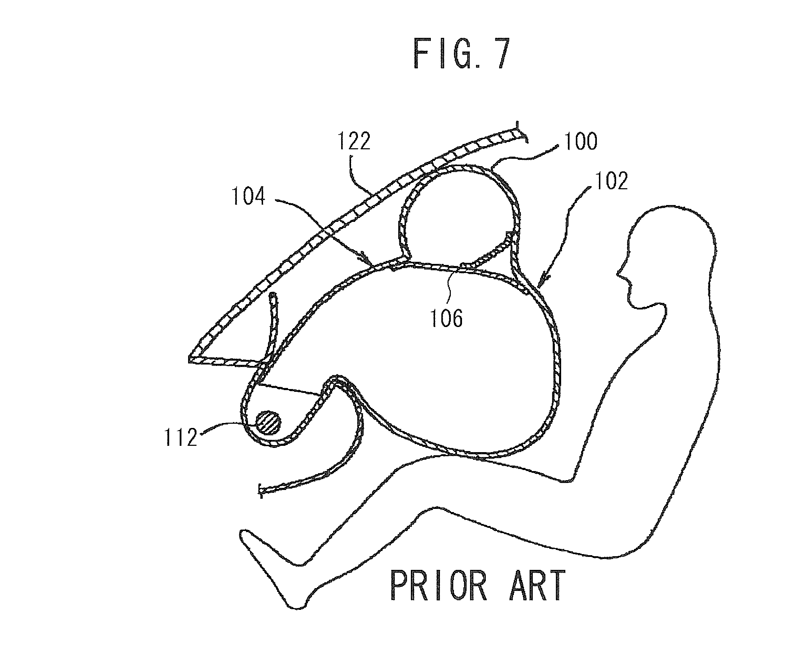

FIG. 7 shows an example of such a passenger airbag device.
A cushion 100 of this passenger airbag device includes an occupant-facing surface 102 at its front end, and a windshield-facing surface 104 at an upper surface thereof. The occupant-facing surface 102 and the windshield-facing surface 104 are configured to be connected by an inner member 106. Therefore, when an inflator 112 is activated to discharge gas, the occupant-facing surface 102 is inflated toward the occupant due to the pressure of the gas, and a middle portion of the windshield-facing surface 104 in the top-bottom direction is pulled by the occupant-facing surface 102 through the inner member 106 and is deployed in a shape recessed toward the inner side of the cushion away from the windshield 122. With this configuration, the volume of the cushion 100 is reduced.

Similarly, although it is not necessarily aimed at reducing the volume of the cushion of an airbag device, a passenger airbag device having a cushion composed of a first inflation portion, which constitutes an occupant protection portion that can interfere with an occupant seated in a passenger's seat, and a second inflation portion, which is inflated between the first inflation portion and the instrument panel with the inflation gas flowing from the first inflation portion when the first inflation portion is inflated, is known (see PTL 2).

However, because the cushion 100 of the airbag device disclosed in PTL 1 is reduced in volume on the windshield side, the behavior of the cushion 100 when deployed may be less stable. Furthermore, because a separate member, i.e., the inner member 106, is required and because an operation to attach the inner member 106 to the occupant-facing surface 102 and the windshield-facing surface 104 is required, the fabrication process becomes complex, resulting in another problem in that the cost is increased compared with a cushion formed by simply joining the base fabric pieces.
Furthermore, although the passenger airbag device disclosed in PTL 2 has a more complex structure than that disclosed in PTL 1 and requires high cost, it does not always succeed in reducing the volume of the cushion of the airbag device.

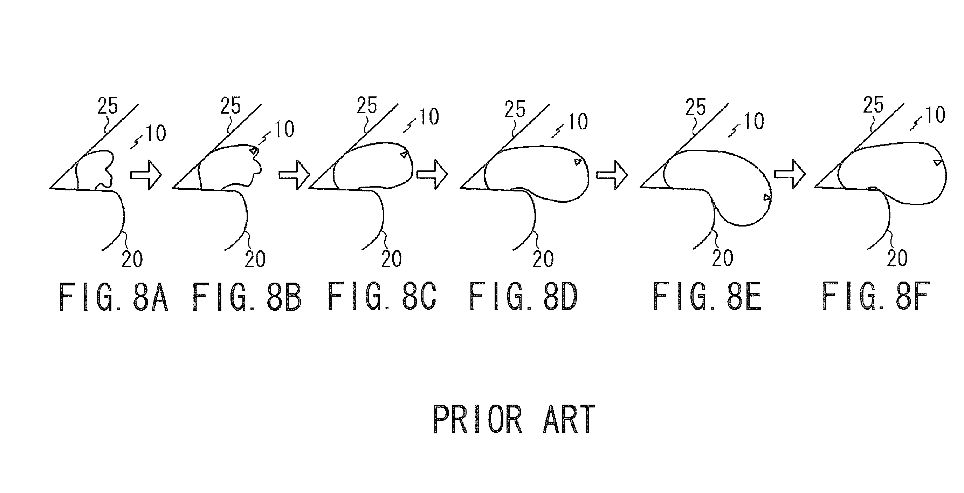

If the overall volume of the cushion is simply reduced, as shown in, for example, FIG. 8, the cushion 10 starts to be inflated and deployed from the top surface of the instrument panel 20, is deployed along the top surface of the instrument panel 20 toward the occupant, without completely filling the space between the instrument panel 20 and the windshield 25 (see FIGS. 8A to 8D). In the subsequent process of being inflated and deployed, the cushion 10 temporarily hangs down in front of the instrument panel 20 (see FIG. 8E) but is then erected away from the panel surface upon further application of the gas pressure from the inflator (see FIG. 8F). Therefore, the behavior of the cushion 10 is unstable, and sufficient support may not be provided because the support position of the cushion 10 when the occupant moves forward into the cushion 10 is unstable.

Hence, a passenger airbag device that shows a stable behavior when inflated and deployed and has a sufficient impact-absorbing ability while reducing the volume of the cushion has been required. The applicant, in view of the above-described circumstances, has developed a passenger airbag device that includes a belt-like main panel having a surface facing an occupant, and left and right side panels joined to side edges of the main panel, and that has a projecting portion on a back surface side of a cushion, as viewed from the occupant.
In this passenger airbag device, when the cushion is inflated and deployed, the projecting portion of the cushion is supported by a front surface of an instrument panel. Thus, even if the cushion of the passenger airbag device is reduced in volume, the behavior thereof is stabilized.

However, when sewing the base fabric pieces constituting the main panel and the side panels, if ends of the main panel are sewn together first, and then, side edges of the side panels are laid on the side edges of the main panel and sewn thereto, any relative misalignment between the base fabric pieces occurring during sewing cannot be absorbed. As a result, wavy wrinkles (crinkles) are formed at the seam, resulting in a problem of gas leakage or, in an extreme case, breakage of that portion when gas from the inflator is injected.
In particular, when a stitch is sewn along a joining line having a small curvature, the misalignment between the base fabric pieces constituting the main panel and the side panels is likely to occur. However, because the above-described projecting portion, for example, needs to be formed in a shape having a considerably smaller curvature than the other portions, the above-described projecting portion, for example, cannot be formed by using the above-described sewing method.

### Citation List

### Patent Literature

PTL 1: Japanese Unexamined Patent Application Publication No. 2002- 19560
PTL 2: Japanese Unexamined Patent Application Publication No. 2005-329749

### Summary of Invention

### Technical Problem

The present invention has been made to solve this problem, and an object thereof is, by employing a new sewing method capable of absorbing any misalignment between the base fabric pieces, to enable a portion with a desired curvature to be formed in the cushion, thereby reducing the volume of the cushion of a passenger airbag device and thereby realizing a passenger airbag device that shows a stable behavior when inflated and deployed and has a sufficient impact-absorbing ability.

### Solution to Problem

(1) A method of producing a cushion of a passenger airbag device of the present invention is a method of producing a cushion of a passenger airbag device having a portion with a desired curvature by sewing side edges of base fabric pieces constituting a main panel and left and right side panels. The method includes a step of sewing the main panel and the side panels together so as to form a rectangular opening, whose short sides have a length equal to the width of the side panels and whose long sides have a length equal to the width of the main panel, at a position where stitches in the main panel and side panels start or end; and a step of forming the portion with a desired curvature by folding the short sides toward the opening and sewing the short sides and the long sides together.
(2) In the method of producing a cushion of a passenger airbag device of the present invention described in the above (1), the cushion has, on an instrument panel side thereof in an inflated and deployed state, a projecting portion that functions as support means when an occupant moves forward therein, and the portion with a desired curvature is the projecting portion..
(3) In the method of producing a cushion of a passenger airbag device of the present invention described in the above (1), the cushion, in an inflated and deployed state, has a shape corresponding to a space between a windshield and a top surface of the instrument panel so as to fill the space, and the portion with a desired curvature is the portion having a shape corresponding to the space.

### Advantageous Effects of Invention

According to the present invention, by sewing the main panel and the side panels together by following the new sewing process, a portion with a desired curvature can be formed in the cushion. For example, by forming a projecting portion that serves as support means when the cushion is inflated and deployed, it is possible to realize a passenger airbag device that has a smaller volume compared with typical existing cushions of passenger airbag devices and that can be inflated and deployed in a stable manner regardless of the design of the instrument panel, in which the passenger airbag device is to be installed, or the layout of the vehicle.

### Brief Description of Drawings

[FIG. 1] FIG. 1 is a perspective view of a cushion of a first passenger airbag device produced by a production method of the present invention, in an inflated state.
[FIG. 2] FIG. 2 is a side view of the cushion in an inflated state, showing a state before an occupant moves forward therein.
[FIG. 3] FIG. 3 is a side view showing the occupant moving forward into the cushion in an inflated state.
[FIG. 4] FIG. 4 includes schematic views for describing the behavior of the cushion in an inflated and deployed state.
[FIG. 5] FIG. 5 is a side view of a cushion of a second passenger airbag device in an inflated and deployed state.
[FIG. 6] FIG. 6 includes diagrams for describing a method of producing a cushion of a passenger airbag device according to an embodiment of the present invention.
[FIG. 7] FIG. 7 shows an example of an existing passenger airbag device.
[FIG. 8] FIG. 8 includes schematic views for describing the behavior of a cushion according to Comparative Example, in an inflated and deployed state.

### Description of Embodiments

Before describing a production method of the present invention, first, a passenger airbag device having a cushion that can be produced by employing a sewing method according to the present invention, that is, a passenger airbag device that shows a stable behavior when inflated and deployed and has a sufficient impact-absorbing ability while reducing the volume of the cushion thereof, will be described.

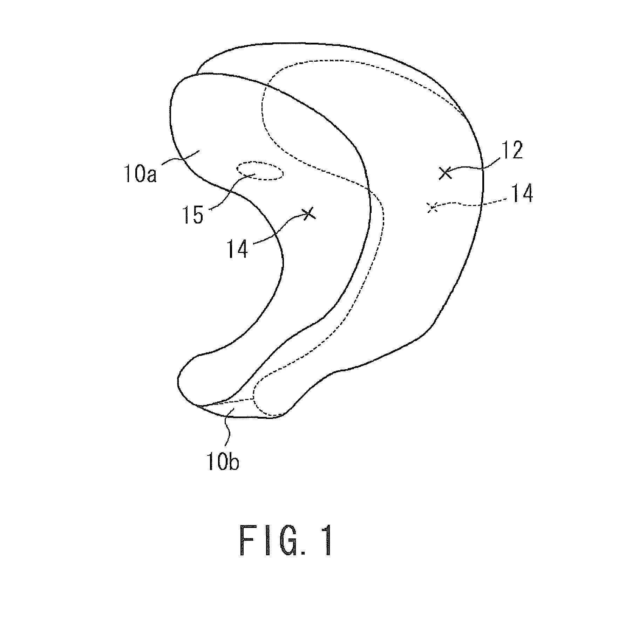

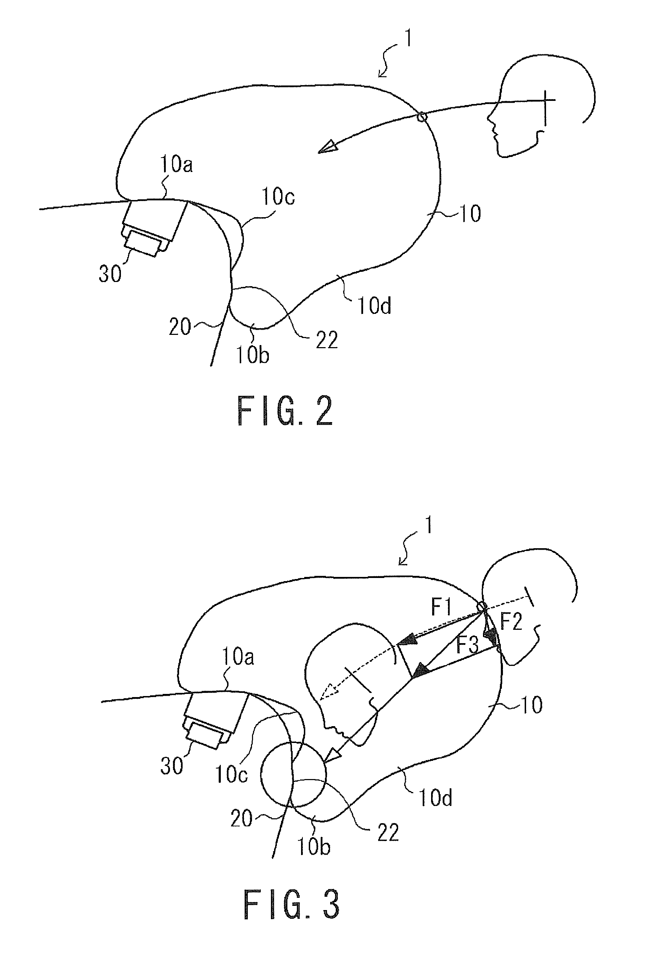

FIG. 1 is a perspective view of a cushion 10 of the passenger airbag device in an inflated state. FIG. 2 is a side view of the cushion 10 in an inflated state, showing a state before an occupant moves forward therein.
The cushion 10 of the passenger airbag device 1 includes three pieces, i.e., a main panel 12 and side panels 14, and has a configuration in which the side panels 14 are attached to side edges of the main panel 12, forming a single component. The main panel 12 has an opening 15 to which an inflator is attached.

As shown in FIG. 2, the cushion 10 includes, on an instrument panel side as viewed from the occupant side (hereinbelow, simply, "back surface side"), an attaching portion 10a to which an inflator 30 is to be attached; a projecting portion 10b that comes into contact with a side surface of the instrument panel; a depressed portion or a recess 10c formed adjacent to the projecting portion 10b and between the attaching portion 10a and the projecting portion 10b; and a recess 10d provided adjacent to and below the projecting portion 10b. The other side of the recess 10d is continuous with the occupant side or the surface side, and the occupant-facing surface constitutes a smooth surface that reduces the impact exerted when the occupant moves forward therein.
The side panels 14 are cut into a shape having portions corresponding to the projecting portion 10b, the recess 10c, and the recess 10d to realize a back surface shape of the cushion 10 of the passenger airbag device 1.

The left and right side panels 14, cut into the above shape, are joined to the side edges of the main panel 12 by, for example, sewing, thereby forming the cushion 10.
Herein, the projecting portion 10b of the cushion 10 is a portion with a desired curvature different from the other portions of the cushion 10 (herein, a portion having a considerably smaller curvature than the other portions). The tip thereof comes into contact with a front surface 22 of the instrument panel 20 when the cushion 10 is inflated and deployed, and the projecting portion 10b constitutes a support portion of the cushion 10 that receives the occupant moving forward therein.

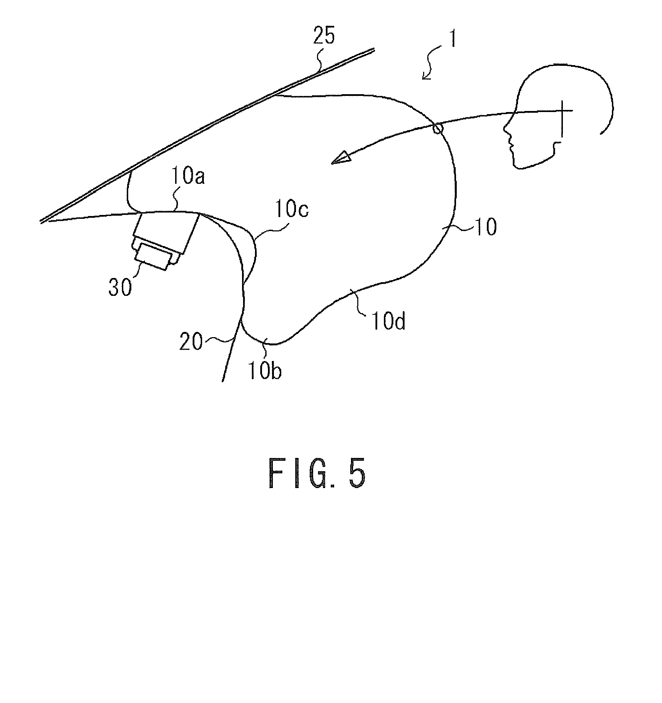

FIG. 3 is a side view showing the occupant moving forward into the cushion 10. In FIG. 3, forces acting when the occupant moves forward into the cushion are illustrated in a decomposed manner.
As shown in FIG. 3, when the gas from the inflator 30 is supplied to the cushion 10, the cushion 10, as will be shown in FIG. 5 mentioned below, is inflated on the instrument panel 20 by a gas jet and is deployed outward. When the cushion 10 has been deployed outward beyond the top surface of the instrument panel 20, the cushion 10 is then deployed downward under the influence of its own weight, and the projecting portion 10b comes into contact with the front surface 22 of the instrument panel 20. Once the projecting portion 10b comes into contact with the front surface 22 of the instrument panel 20, the second recess 10d restricts the inflation and deployment of the cushion 10 downward. The projecting portion 10b is kept in contact with the front surface 22 of the instrument panel 20 due to the gas pressure from the inflator. Thus, the position of the cushion 10 in an inflated and deployed state can be stabilized.

Reference signs F1 to F3 in FIG. 3 represent the relationship between forces applied to the cushion 10 when the occupant moves forward into the cushion 10 in an inflated and deployed state, as above.
More specifically, reference sign F1 represents the vector (magnitude and direction) of a force applied to the cushion 10 when an occupant's head moves forward into the cushion 10. Reference sign F2 represents the vector of gravity acting on the cushion 10. Reference numeral F3 represents the vector of a resultant force of the vectors F1 and F2, in other words, the direction and magnitude of the force actually applied to the cushion 10 when the occupant moves forward into the cushion 10 in an inflated and deployed state.

It is preferable that the projecting portion 10b be formed so as to extend in the direction of the vector F3, taking into consideration the vector F3, of this force. By doing so, when the occupant moves forward into the cushion 10, that force is directly transmitted to the front surface of the instrument panel 20 through the projecting portion 10b, and, as a result of that force being balanced with the drag force, the cushion 10 can reduce the impact applied to the occupant due to a collision, in a stable manner (i.e., without moving arbitrarily).

Note that, if the position of the projecting portion 10b is misaligned with the direction of the vector F3, when the occupant moves forward into the cushion 10 of the passenger airbag device 1, a rotation moment due to the vector F3, of the force is generated in the cushion 10, at around a contact point between the projecting portion 10b and the instrument panel 20. Thus, the cushion 10 moves arbitrarily and therefore cannot reduce the impact in a stable state.

Conversely, if the vector F3, of the force acting when the occupant moves forward into the cushion 10 is identified, because portions on the back surface side of the cushion 10 other than a portion subjected to the vector F3, i.e., portions other than the projecting portion 10b, are obviously not involved in the transmission of the force, such portions need not be brought into contact with the instrument panel 20, and consequently, it is understood that the volume of these portions can be reduced.
Hence, in this passenger airbag device, portions other than the projecting portion 10b are cut away so that these portions are recessed inward as much as possible, while the projecting portion 10b of the cushion 10 is brought into contact with the surface of the instrument panel 20. With this configuration, the behavior of the airbag device in an inflated and deployed state is stabilized, and the volume of the cushion 10 is reduced.

In the passenger airbag device 1, by reducing the volume of the cushion 10, the power of the inflator can be reduced relatively, and the size of the side panels 14 constituting the cushion 10 can also be reduced relatively. As a result, the cost can be reduced. Furthermore, because the cushion 10 is reduced in volume on the back surface side and lower surface side thereof, there is no possibility of its behavior, when inflated and deployed, being unstable due to lack of support by the windshield 25.

Although the direction in which the projecting portion 10b of the cushion 10 extends is aligned with the direction of the vector F3 when the occupant moves forward into the cushion 10, the position, in the cushion 10 of the passenger airbag device 1, at which the occupant actually moves forward therein varies depending on the height and posture of the occupant. Therefore, the direction of the vector F3 needs to have a certain width (tolerance).
The actually required width can be determined based on results of experiments conducted with respect to assumed occupants' heights and postures. In actuality, the width of the projecting portion 10b is obtained by multiplying a value range obtained from the results of experiments by a predetermined factor of safety.

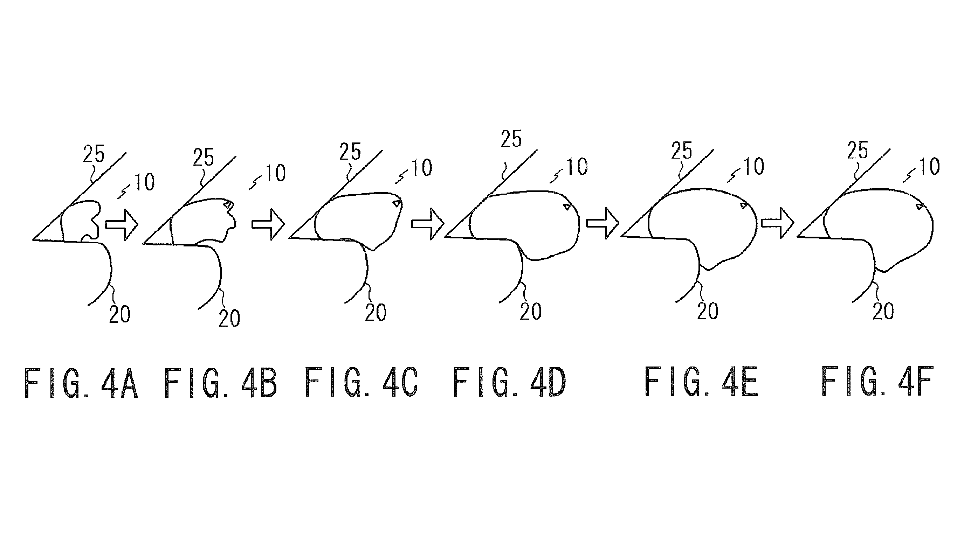

FIGS. 4A to 4F are schematic views for describing the behavior of the cushion 10 of the passenger airbag device 1 in an inflated and deployed state.
A process is shown in which the cushion 10 starts to be inflated and deployed from a predetermined position of the top surface of the instrument panel 20 and continues to be deployed upward and rightward in the figures while being restricted between the windshield 25 and the top surface of the instrument panel 20 (see FIGS. 4A to 4C). As the lower surface of the cushion 10 extends outward beyond the top surface of the instrument panel 20, the projecting portion 10b moves downward, while making contact with the front surface of the instrument panel 20 (see FIGS. 4D and 4E), and stays at that position (FIG. 4F).
As is clear from the comparison between the cushion 10 according to this embodiment and the cushion 10 shown in FIG. 8, which is simply reduced in volume without providing the projecting portion 10b, because the cushion 10 has the projecting portion 10b on the back surface thereof, when it has been deployed outward beyond the instrument panel 20, the projecting portion 10b is then deployed downward and comes into contact with the front surface 22 of the instrument panel 20. Thus, the cushion 10 is not erected away from the surface of the instrument panel, as shown in FIG. 8.

As has been described above, in the passenger airbag device 1, the volume of the cushion 10 is reduced not by using a component other than the base fabric pieces, as required in an existing system, but simply by sewing the side panels 14, which have been cut into a shape with a desired curvature portion so as to form the projecting portion 10b, to the edge of the main panel 12. Thus, the production cost can be reduced.

Furthermore, because the cushion 10, even without the support by the windshield 25 during inflation and deployment, is deployed outward and then downward when it has extended beyond the top surface of the instrument panel 20, as described above, and because the tip of the projecting portion 10b comes into contact with the surface of the instrument panel 20 at a relatively early stage of the deployment and is maintained in that state, the behavior thereof in a deployed state can be stabilized.

Next, a second passenger airbag device to which the production method of the present invention is applied will be described.
FIG. 5 is a side view of the cushion 10 of the second passenger airbag device 1, in an inflated and deployed state.
The cushion 10 comes into contact with the windshield 25 as it is inflated and deployed, and the behavior thereof is stabilized by being in contact with the windshield 25 and the top surface of the instrument panel 20. A portion of the cushion 10 to be deployed between the windshield 25 and the top surface of the instrument panel 20 is formed in a shape corresponding to the shape of the space therebetween, and the shape of the other part is the same as that of the passenger airbag device 1.

With this configuration, the volume of the cushion 10 of the second passenger airbag device 1 can be further reduced, compared with the cushion 10 of the first passenger airbag device 1. More specifically, because the portion of the cushion 10 between the windshield 25 and the top surface of the instrument panel 20 is formed in a shape corresponding to the shape of the space therebetween, an excess part that does not fit in the space between these portions does not protrude and swell out toward the occupant side. Thus, not only can the power of the inflator be further reduced, but also can the size of the side panels 14 be further reduced. Accordingly, a further cost reduction is possible.

Next, an embodiment of a method of producing the above-described passenger airbag device will be described with reference to the drawings.
The passenger airbag device to be produced has already been described above and is formed of the main panel 12 and the left and right side panels 14.

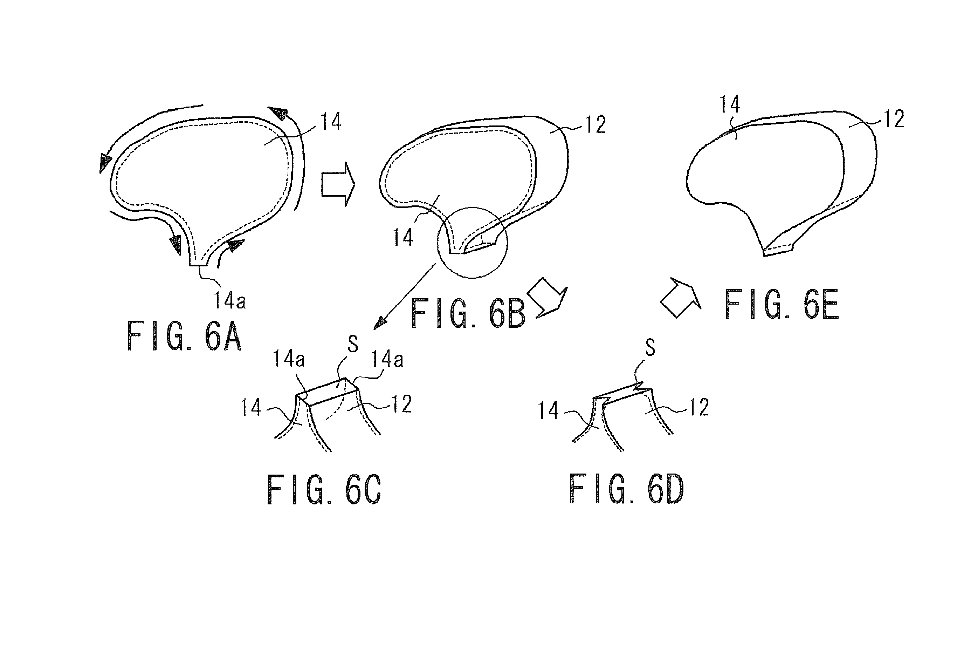

FIGS. 6A to 6D are diagrams showing a sewing process according to the embodiment of the present invention.
FIG. 6C is an enlarged view of the relevant part (a rectangular portion S) in FIG. 6B.
In this sewing process, the main panel 12 and the side panels 14, cut into a shape including a small curvature portion, such as the above-described projecting portion, and a straight portion 14a at the tip thereof, are sewn together along their edges (see FIGS. 6A and 6B). At this time, ends of the main panel 12, as well as a stitch-starting end and a stitch-terminating end in the main panel 12 and side panels 14, are not sewn together. By doing so, the ends of the main panel 12 are not bound by each other at the stitch-starting end and stitch-terminating end, and a rectangular portion S, in which the straight portions 14a constitute short sides and long sides have a length equal to the width of the main panel 12, is left as an unsewn portion (see FIG. 6C).

Then, the short sides of the unsewn rectangular portion S, i.e., the straight portions 14a of the side panels 14, are folded inward of the rectangular shape in a V-shape and closed (see FIG. 6D), and the closed portion is sewn together (see FIG. 6E).
By using this sewing method, even if the main panel 12 and the left and right side panels 14 are displaced with respect to one another during sewing, because such displacement occurring during sewing is adjusted when the short sides (straight portions 14a) of the unsewn rectangular portion are folded inward in a V-shape and sewn, the seams do not become wavy.
Accordingly, portions having small curvatures (irregular-shape portions), such as the projecting portion 10b of the cushion 10 and the portion between the windshield 25 and the top surface of the instrument panel 20, can be formed without taking into consideration the radius of curvature.
Note that a plurality of irregular-shape portions can be formed in the main panel 12. In such a case, the main panel 12 is formed of a plurality of panels. Reference Signs List

- 1:: passenger airbag device,
- 10:: cushion,
- 10b:: projecting portion,
- 10c and 10d:: recess,
- 12:: main panel,
- 14:: side panels,
- 20:: instrument panel, and
- 25:: windshield.

## Claims

1. A method of producing a cushion of a passenger airbag device having a portion with a desired curvature by sewing side edges of base fabric pieces constituting a main panel and left and right side panels, the method comprising:
a step of sewing the main panel and the side panels together so as to form a rectangular opening, whose short sides have a length equal to the width of the side panels and whose long sides have a length equal to the width of the main panel, at a position where stitches in the main panel and side panels start or end; and
a step of forming the portion with a desired curvature by folding the short sides toward the opening and sewing the short sides and the long sides together.

2. The method of producing a cushion of a passenger airbag device according to Claim 1,
wherein the cushion has, on an instrument panel side thereof in an inflated and deployed state, a projecting portion that functions as support means when an occupant moves forward therein, and
wherein the portion with a desired curvature is the projecting portion.

3. The method of producing a cushion of a passenger airbag device according to Claim 1,
wherein the cushion, in an inflated and deployed state, has a shape corresponding to a space between a windshield and a top surface of the instrument panel so as to fill the space, and
wherein the portion with a desired curvature is the portion having a shape corresponding to the space.
